# EUROPÄISCHE PATENTSCHRIFT

(11) **EP 1 788 284 B1**
(45) Veröffentlichungstag und Bekanntmachung des Hinweises auf die Patenterteilung: **18.03.2009**
(21) Anmeldenummer: 06021930.0
(22) Anmeldetag: 19.10.2006
(51) Int. Cl.: F16H 47/04, F16H 48/26

(54) **Einrichtung zum variablen Antrieb von Rädern eines Kraftfahrzeugs**
Vehicle wheel driving mechanism
Dispositif d'entraînement pour les roues d'un véhicule

(30) Priorität: 19.11.2005 DE 102005055202
(43) Veröffentlichungstag der Anmeldung: 23.05.2007
(73) Patentinhaber: Hofer Getriebetechnik GmbH, 38444 Wolfsburg (DE)
(72) Erfinder: Bünder, Carsten, 38518 Gifhorn (DE)
(74) Vertreter: Cremer & Cremer

(56) Entgegenhaltungen:
- WO-A-03/066363
- DE-A1- 4 314 797
- US-A- 2 979 037
- US-A- 5 518 463
- US-A- 6 102 490
- US-A- 6 120 407
- US-A1- 2004 048 714
- US-A1- 2004 058 774
- US-A1- 2005 070 391
- US-A1- 2005 210 873
- US-B1- 6 520 880
- BERNHARD SCHIVAS: "DAS PACKENDE SPIEL MIT DEN KURVEN" AUTOMOBIL-REVUE, HALLWAG, BERN, CH, Bd. 35, 25. August 2004 (2004-08-25), Seite 15, XP008075130 ISSN: 0005-1314

## Beschreibung

Die Erfindung bezieht sich auf eine Einrichtung zum variablen Antrieb von Rädern einer Achse eines Kraftfahrzeugs nach dem Oberbegriff des Patentanspruchs 1.

Es ist bekannt, das seitliche Ausbrechen eines Kraftfahrzeugs bei Lenkvorgängen durch ein elektronisches Stabilitäts-Programm - ESP - zu verhindern. Dieses hochwirksame Stabilitäts-Programm, auch Fahrdynamikregelung - FDR - genannt, greift in das Brems- und Antriebssystem eines Kraftfahrzeugs ein, und es fasst die Kraftfahrzeug-Teilsysteme Anti-Blockier-System -ABS -, Antriebs-Schlupf-Regelung - ASR - Motorschleppmoment-Regelung - MSR -, Automatische Bremskraftverteilung - ABV - und Giermoment-Regelung - GMR - zusammen.

Systembedingt wird beim Betrieb des elektronischen Stabilitäts-Programms kinetische Energie vernichtet, was unter definierten fahrdynamischen Situationen des Kraftfahrzeugs unerwünscht sein kann. In der CH Zeitschrift Automob. Rev. 99(2004)35, Seite 15 wird ein Antriebssystem für ein Kraftfahrzeug beschrieben, bei dem in einer ein Differential und Räder aufweisenden ersten Achse eine Steuereinrichtung vorgesehen ist. Mit dieser Steuereinrichtung wird das Antriebsmoment an einem Rad der ersten Achse in Abhängigkeit von Lenkeinschlägen an einer zweiten Achse erhöht. Einrichtungen dieser Art sind auch im Zusammenhang mit den englischen Begriffen ACTIVE YAW und TORQUE VECTORING bekannt geworden.

Aus der DE 693 01434 T2 geht eine Vorrichtung zum Verteilen des Antriebsmoments auf die linke und rechte Seite eines Fahrzeugs hervor. Diese Vorrichtung besitzt ein Differential und eine Verteilereinheit mit einer ersten Reibungskupplung und einer zweiten Reibungskupplung. Mit der Verteilereinheit erfolgt die Zuteilung des Antriebsdrehmoments auf das Rad der linken Radachse bzw. das Rad der rechten Radachse.

Eine andere Vorrichtung zum Verteilen des Antriebsmoments auf die linke Radachse und die rechte Radachse wird auch noch in der DE 693 04 144 T2 behandelt.

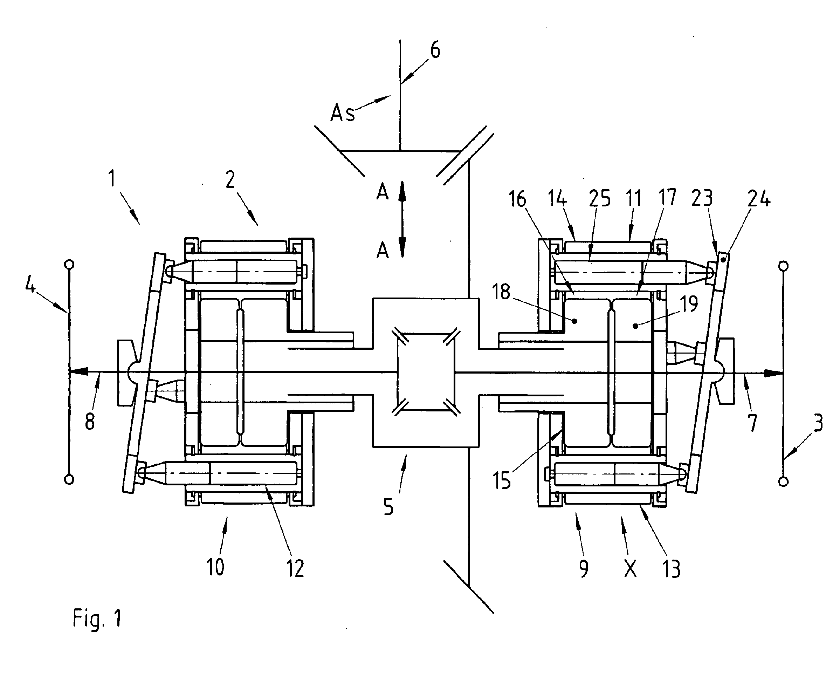

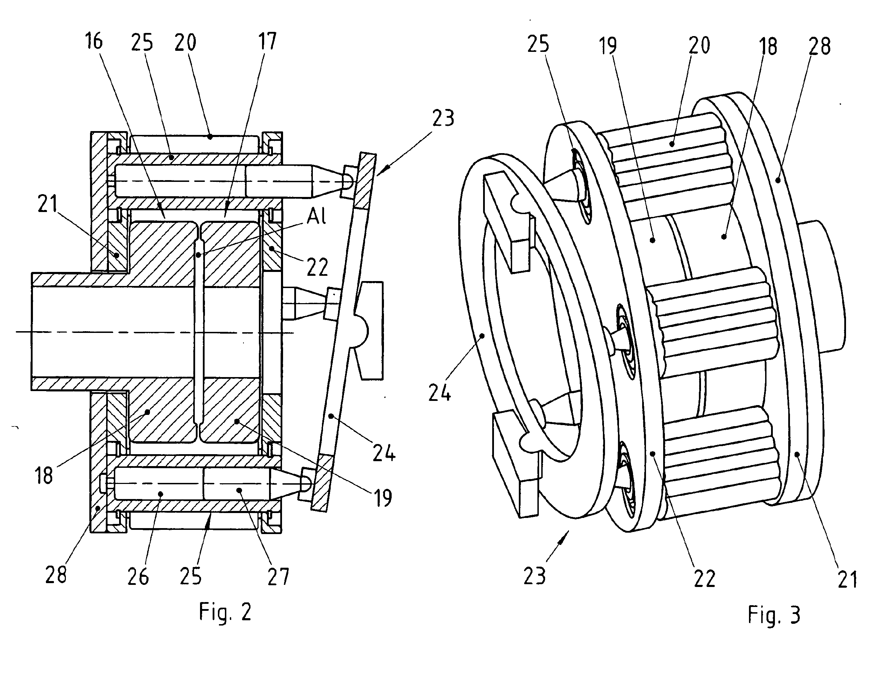

Ein inzwischen weithin verbreiteter Typ eines Torque-Vectoring-Getriebes lässt sich den beiden Ausführungsbeispielen der US 6 120 407 entnehmen, die in den schematischen Darstellungen Kupplungen zeigen und in den konstruktiven Darstellungen kleine hydraulische Zylinder, die als Aktuatoren genutzt werden, vierfach verteilt darstellen. Die Übersetzungsverhältnisse der Zahnräder werden allgemein anhand der Zähnezahl definiert. Zwar zeigen die Figuren 1 und 3 schon recht kompakte Anordnungen, jedoch müsste bei einem anderen hydraulischen Konzept ein noch kompakteres Koppelgetriebe zu schaffen sein.

Die US 2004 058 774 A1' qreift ebenfalls auf Drehmomentsenken zurück, die wie klassische Kupplungen dargestellt sind, die Beschreibung jedoch wird soweit erweitert, dass sämtliche Arten von Drehmomentübertragern verwendet werden können. Der Planetenradsatz ist für das linke und das rechte Sonnenrad unterschiedlich ausgeführt. Die sich aus der Beschreibung ergebende Anordnung ähnelt den Darstellungen der US 6 120 407.

Die US2004 058774 A1 zeigt damit eine Einrichtung zum variablen Antrieb von Rädern einer Achse eines Kraftfahrzeugs, die jeweils eine Steuervorrichtung zur Beeinflussung des Antriebsmoments für das jeweilige Rad aufweist, wobei jede Steuervorrichtung ein mechanisches Steuerelement und ein hydrostatisches Steuerelement umfaßt, die zusammenarbeiten und über die dem jeweiligen Rad des Kraftfahrzeugs ein definiertes Antriebsdrehmoment zugeteilt wird, wobei jedes mechanische Steuerelement durch eine Planetengetriebeeinheit gebildet wird, wobei die Planetengetriebeeinheit zwei Stufen aufweist und mit zwei Sonnenrädern versehen ist, die mit Planetenrädern kämmen, wobei die Planetenräder auf einer gemeinsamen Welle drehfest gekoppelt sind.

Die US2004 048714 A1 zeigt eine Einrichtung zum variablen Antrieb von Rädern einer Achse eines Kraftfahrzeugs, die jeweils eine Steuervorrichtung zur Beeinflussung des Antriebsmoments für das jeweilige Rad aufweist, wobei jede Steuervorrichtung ein mechanisches Steuerelement und ein hydrostatisches Steuerelement umfaßt, die zusammenarbeiten und über die dem jeweiligen Rad des Kraftfahrzeugs ein definiertes Antriebsdrehmoment zugeteilt wird, wobei jedes mechanische Steuerelement durch eine Planetengetriebeeinheit gebildet wird, wobei die Planetengetriebeeinheit zwei Stufen aufweist und mit zwei Sonnenrädern versehen ist, die mit Planetenrädern kämmen, wobei jedes Planetenrad zwischen beabstandeten Planetenträgern gelagert ist und wobei jedes hydrostatische Steuerelement durch eine mit der Planetengetriebeinheit zusammenarbeitende Schrägscheibenpumpe gebildet wird.

Schrägscheibenpumpen sind im Automobil bekannt, so z. B. aus der US 6 102 490 als Bremskreispumpe mit Geber- und Nehmeranordnung. Die hydraulischen Steuerungen solcher Pumpen können nach US 2 979 037 durch Schlitzscheibensteuerungen bestimmt werden.

Nach US 2005 070 391 A1 können parallel zu einem Kegelradsatz zwei Umlaufrädergetriebe spiegelbildlich zueinander angeordnet werden, an deren Sonnenräder weitere Zahnräder angebunden sind, um einen zwei Pumpen umfassenden Hydraulikkreislauf mit zahlreichen Ventilen zu beeinflussen, damit das an die an den Planetenrädern angeschlossenen Kraftfahrzeugrädern abgegebene Drehmoment hydraulisch gesteuert unterschiedlich aufgeteilt werden kann. Ein elektrisches Steuergerät und ein Plothydrauliksystem bestimmen die Drehmomentverteilung, die zwischen den beiden Rädern der Achse durchzuführen ist. Die Einstellung erfolgt somit elektrisch und hydraulisch. Die Pumpen selbst können schräg angeordnet sein, jedoch sind sie abgekoppelt von den Planetenradsätzen und den Umlaufrädergetrieben an einer anderen Stelle zu platzieren. Durch diese Anordnung sind sehr viele Verzahnungsteile notwendig.

Es ist Aufgabe der Erfindung eine Einrichtung zum variablen Antrieb einer Achse eines Kraftfahrzeugs zu schaffen, bei der eine Steuervorrichtung gezielt und funktionsgerecht Antriebsmomente auf die Räder dieser Achse verteilt.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass mit der ein mechanisches Steuerelement und ein hydrostatisches Steuerelement umfassenden Steuervorrichtung definiert und mit vorbildlicher Funktion ein Antriebsmoment einem Rad der Achse zugeteilt wird. Das mechanische Steuerelement wird durch eine Planetengetriebeeinheit mit bspw. zwei Stufen gebildet, welche Planetengetriebeeinheit für die Anwendung in der Steuervorrichtung erprobte Vorzüge aufweist. Sinngemäß gilt dies auch für das als Schrägscheibenpumpe ausgeführte hydrostatische Steuerelement, deren technische Eigenschaften sich für den Einsatz in der Steuervorrichtung ausgezeichnet anbieten. Die Planetengetriebeeinheit und die Schrägscheibenpumpe lassen sich, obwohl unterschiedlicher Bauart, mit vertretbarem Aufwand zu der Steuervorrichtung zusammenführen. Dabei können die einzelnen Pumpen der Schrägscheibenpumpe problemlos entweder innerhalb der Planetenräder oder außerhalb von letzteren mitlaufend eingebaut werden. Die Steuerung des Antriebsdrehmoments für das jeweilige Rad kann durch Verstellung des Hubs der Schrägscheibe der Schrägscheibenpumpe erfolgen. Denkbar ist aber auch eine als Drossel für Hydraulikmedium dienende Steuerscheibe einzusetzen, über die die Pumpen der Schrägscheibenpumpe beeinflusst werden. Darüber hinaus ist die Integration der komplettierten Steuereinheit in eine Radantriebsachse ohne weiteres möglich.

In den Zeichnungen wird ein Ausführungsbeispiel der Erfindung gezeigt, das nachstehend näher erläutert wird.

Es zeigen
Fig. 1 eine schematische Ansicht von oben auf einen Antrieb einer Hinterachse eines Kraftfahrzeugs mit der eine Steuervorrichtung aufweisende Einrichtung nach der Erfindung,
Fig. 2 eine Einzelheit X der Fg. 1 in größerem Maßstab,
Fig. 3 eine Schrägansicht der Steuervorrichtung mit mehreren Einzelheiten,

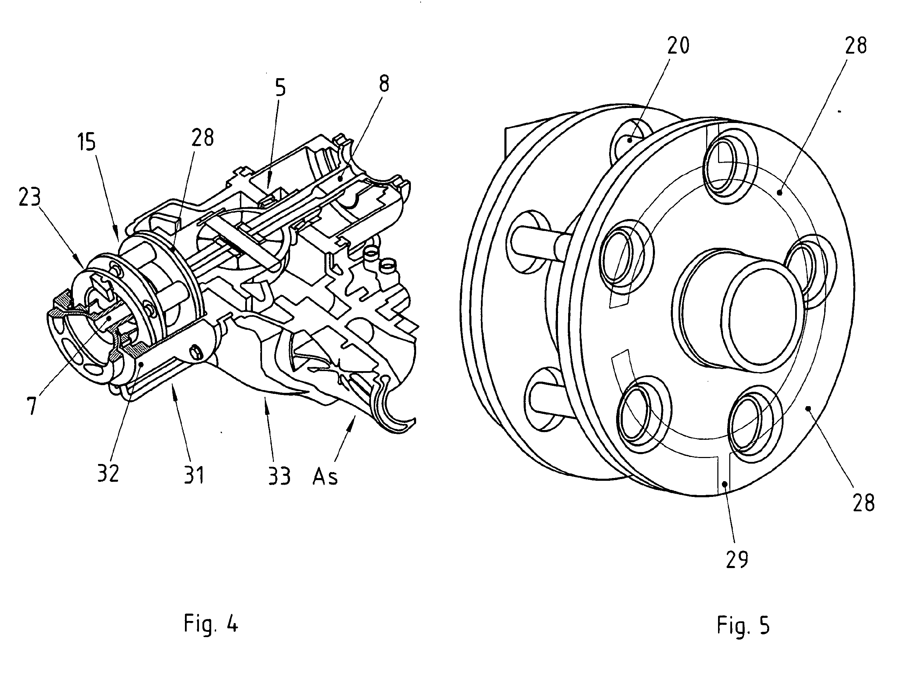

Fig. 4 eine weitere Schrägansicht der Steuervorrichtung, jedoch dargestellt in Verbindung mit einem Differential der Hinterachse,
Fig. 5 eine Schrägansicht auf eine Steuerscheibe der Steuervorrichtung.

Von einem Kraftfahrzeug 1, das bspw. Allradantrieb aufweist - siehe die eingangs zitierte DE 693 01 434 T2 - ist lediglich eine Hinterachse 2 mit einem rechten Rad 3 und einem linken Rad 4 prinzipiell dargestellt. In die Hinterachse 2 integriert ist ein Differential 5, das Bestandteil eines nicht gezeigten Antriebssystems As ist und mit einer z.B. in Fahrzeuglängsrichtung A-A verlaufenden Eingangswelle 6 und Teilantriebsachsen 7 und 8 in Wirkverbindung steht.

In beide Teilantriebsachsen 7 und 8 sind Einrichtungen 9 und 10 integriert, mit denen die Räder 3 und 4 variabel antreibbar sind. Hierzu sind Steuervorrichtungen 11 und 12 vorgesehen, die zur Beeinflussung des Antriebsmoments an den Rädern 3 und 4 dienen. Jede Steuervorrichtung z.B. 11 umfasst sowohl ein mechanisches Steuerelement 13 wie auch ein hydrostatisches Steuerelement 14, die in der Weise zusammen arbeiten, dass dem der Teilantriebsachse 7 zugehörigen Rad 3 ein definiertes Antriebsdrehmoment zugeteilt wird.

Das mechanische Steuerelement 13 wird durch eine mehrstufige Planetengetriebeeinheit 15 gebildet, die im Ausführungsbeispiel zwei Stufen, nämlich eine erste Stufe 16 und eine zweite Stufe 17, aufweist. Darüber hinaus besitzt die Planetengetriebeeinheit 15 zwei unter Vermittlung eines Axiallagers Al aneinander grenzende Sonnenräder 18 und 19, die mit bspw. fünf gemeinsamen Planetenrädern 20 kämmen. Letztere sind zwischen Planetenträgern 21 und 22 angeordnet.

Das hydrostatische Steuerelement 14 ist als Schrägscheibenpumpe 23 ausgeführt, die mit der Planetengetriebeeinheit 15 zusammenwirkt, wobei die Planetengetriebeeinheit 15 und die Schrägscheibenpumpe 23 koaxial zueinander angeordnet sind, und zwar zwischen dem Differential 5 und dem Rad 3 der Teilantriebsachse 7. Die Schrägscheibenpumpe 23 besitzt eine Schrägscheibe 24 und vorzugsweise fünf Pumpen 25. Jede Pumpe 25 ist mit einem Zylinder 26 und einem Kolben 27 versehen - Fig. 2 -.

Die Pumpen 25 der Schrägscheibenpumpe 23 sind so angeordnet, dass sie von den Planetenrädern 20 umgeben sind. Denkbar ist aber auch diese Pumpen 25 außerhalb der Planetenräder 20 bzw. zwischen benachbarten Planetenrädern mitlaufend vorzusehen.

Zur definierten Steuerung des Antriebsdrehmoments für das Rad 3 wird gemäß einer ersten Ausführungsform der Hub der Schrägscheibe 24 der Schrägscheibenpumpe 23 verändert. Hierzu eignet sich eine hydraulische oder mechanische Aktorik, die durch einen Spindeltrieb dargestellt sein kann. Bei einer zweiten Ausführungsform wird das Antriebsdrehmoment für das Rad unter Vermittlung einer Drossel für Hydraulikmedium zugeteilt. Diese Drossel kann durch eine Steuerscheibe 28 mit Duckkanälen 29 und Saugkanälen 30 dargestellt sein. Die Steuerscheibe 28 arbeitet mit den Pumpen 25 der Schrägscheibenpumpe 23 zusammen und ist an den Planetenträger 21 der Planetengetriebeeinheit 15 herangeführt, so dass besagte Steuerscheibe 28 koaxial zu der Planetengetriebeeinheit 15 angeordnet ist.

Die Steuerscheibe 28, die Planetengetriebeeinheit 15 und die Schrägscheibenpumpe 23 sind zu einer Baueinheit 31 zusammengefasst, die in einem Aufnahmegehäuse 32 untergebracht ist. Das Aufnahmegehäuse 32 ist mit einem das Differential 5 umgebenden Lagergehäuse 33 des Antriebssystems As verblockt.

### Bezugszeichenliste

- 1: Kraftfahrzeug
- 2: Hinterachse
- 3: rechtes Rad
- 4: linkes Rad
- 5: Differential
- 6: Eingangswelle
- 7: Teilantriebsachse
- 8: Teilantriebsachse
- 9: Einrichtung
- 10: Einrichtung
- 11: Steuervorrichtung
- 12: Steuervorrichtung
- 13: mechanisches Steuerelement
- 14: hydrostatisches Steuerelement
- 15: Planetengetriebeeinheit
- 16: erste Stufe
- 17: zweite Stufe
- 18: Sonnenrad
- 19: Sonnenrad
- 20: Planetenräder
- 21: Planetenträger
- 22: Planetenträger
- 23: Schrägscheibenpumpe
- 24: Schrägscheibe
- 25: Pumpe
- 26: Zylinder
- 27: Kolben
- 28: Steuerscheibe
- 29: Druckkanal
- 30: Saugkanal
- 31: Baueinheit
- 32: Aufnahmegehäuse
- 33: Lagergehäuse
- As: Antriebssystem
- AI: Axiallager

## Patentansprüche

1. Einrichtung zum variablen Antrieb von Rädern einer Achse eines Kraftfahrzeugs, die jeweils eine Steuervorrichtung zur Beeinflussung des Antriebsmoments für das jeweilige Rad aufweist, wobei jede Steuervorrichtung ein mechanisches Steuerelement und ein hydrostatisches Steuerelement umfasst, die zusammenarbeiten und über die dem jeweiligen Rad des Kraftfahrzeugs ein definiertes Antriebsdrehmoment zugeteilt wird, wobei jedes mechanische Steuerelement durch eine Planetengetriebeeinheit gebildet wird, wobei
- die Planetengetriebeeinheit (15) mehrere Stufen, vorzugsweise zwei Stufen (16 und 17), aufweist,
- die Planetengetriebeeinheit (15) mit zwei aneinandergrenzenden Sonnenräder (18 und 19) versehen ist, die mit gemeinsamen Planetenrädern (20) kämmen,
- die Planetenräder (20) zwischen beabstandeten Planetenträgern (21 und 22) gelagert sind, und
- jedes hydrostatische Steuerelement (14) durch eine mit der Planetengetriebeeinheit (15) zusammenarbeitende Schrägscheibenpumpe (23) mit planetenartig angeordneten Pumpen (25) und einer Schrägscheibe (24) gebildet wird, wobei jede Pumpe (25) einen Zylinder (26) und einen Kolben (27) umfasst.

2. Einrichtung nach Anspruch 1, **dadurch gekennzeichnet, dass** die Planetengetriebeeinheit (15) und die Schrägscheibenpumpe (23) koaxial zueinander angeordnet sind.

3. Einrichtung nach Anspruch 2, **dadurch gekennzeichnet, dass** die Planetengetriebeeinheit (15) und die Schrägscheibenpumpe (23) zwischen einem Differential (5) eines Antriebsystems (As) und dem Rad (3 oder 4) des Kraftfahrzeugs (1) angeordnet sind.

4. Einrichtung nach den Ansprüchen 1 und 2, **dadurch gekennzeichnet, dass** die Pumpen (25) der Schrägscheibenpumpe (23) von den Planetenrädern (20) umgeben sind.

5. Einrichtung nach den Ansprüchen 1 und 2, **dadurch gekennzeichnet, dass** die Pumpen (25) der Schrägscheibcnpumpe (23) sich außerhalb der Planetenräder (20) erstrecken und mit besagten Planetenrädern (20) umlaufen.

6. Einrichtung nach einem oder mehreren der vorangehenden Ansprüche, **dadurch gekennzeichnet, dass** die Steuerung des Antriebsdrehmoments für das jeweilige Rad (3 oder 4) durch Verstellung des Hubs über die Schrägscheibe (24) erfolgt.

7. Einrichtung nach Anspruch 6, **dadurch gekennzeichnet, dass** die Einstellung der Neigung der Schrägscheibe (24) unter Vermittlung einer Aktorik, wie bspw. Spindeltrieb, erfolgt.

8. Einrichtung nach einem oder mehreren der vorangehenden Ansprüche, **dadurch gekennzeichnet, dass** die Steuerung des Antriebsmoments für das jeweilige Rad durch eine die Pumpen (25) beeinflussende, als Drossel ausgebildete Steuerscheibe (28) bewirkt wird.

9. Einrichtung nach Anspruch 8, **dadurch gekennzeichnet, dass** die Steuerscheibe (28) koaxial zur Planetengetriebeeinheit (15) bzw. Schrägscheibenpumpe (23) angeordnet ist.

10. Einrichtung nach einem oder mehreren der vorangehenden Ansprüche, **dadurch gekennzeichnet, dass** die Schrägscheibe (24), die Planetengetriebeeinheit (15) und die Schrägscheibenpumpe (23) zu einer Baueinheit (31) in einem Aufnahmegehäuse (32) zusammengefasst sind.

11. Einrichtung nach Anspruch 10, **dadurch gekennzeichnet, dass** das Aufnahmegehäuse (32) mit einem Lagergehäuse (33) des Antriebssystems (As) verblockt ist.

## Claims

1. Arrangement for variable drive of wheels of an axle of a motor vehicle, said arrangement each comprising a control device for influencing the drive torque on said wheels, wherein each control device comprises a mechanical control element and a hydrostatic element and the mechanical control element and the hydrostatic control element work together to allocate a defined drive torque to a particular wheel of the motor vehicle, whereas each mechanical control element is formed by a planetary gear unit, whereas
- the planetary gear unit (15) has multiple stages, preferably two stages (16 and 17),
- the planetary gear unit (15) is provided with two adjoining sun wheels (18 and 19) which engage with shared planet wheels (20),
- the planet wheels (20) are mounted between planet carriers (21 and 22) which are spaced apart, and
- each hydrostatic control element (14) is formed by a swashplate pump (23), working together with the planetary gear unit (15), having pumps situated like planets (25) and a swashplate (24), each pump (25) comprising a cylinder (26) and a piston (27).

2. Arrangement according to claim 1, **characterized in that** the planetary gear unit (15) and the swashplate pump (23) are situated coaxially to one another.

3. Arrangement according to claim 2, **characterized in that** the planetary gear unit (15) and the swashplate pump (23) are situated between a differential (5) of a drive system (As) and the wheel (3 or 4) of the motor vehicle (1).

4. Arrangement according to claims 1 and 2, **characterized in that** the pumps (25) of the swashplate pump (23) are enclosed by the planet wheels (20).

5. Arrangement according to claims 1 and 2, **characterized in that** the pumps (25) of the swashplate pump (23) sprawl outside the planet wheels (20) and revolve with the said planet wheels (20).

6. Arrangement according to one or more of the preceding claims, **characterized in that** the drive torque for the particular wheel (3 or 4) is controlled by adjusting the stroke via the swashplate (24).

7. Arrangement according to claim 6, **characterized in that** the inclination of the swashplate (24) is set by means of an actuator, such as a spindle drive.

8. Arrangement according to one or more of the preceding claims, **characterized in that** the control of the drive torque for the particular wheel is caused by a disk cam (28), implemented as a throttle, which influences the pumps (25).

9. Arrangement according to claim 8, **characterized in that** the disk cam (28) is situated coaxially to one of the planetary gear unit (15) and/or the swashplate pump (23).

10. Arrangement according to one of the preceding claims, **characterized in that** the swashplate (24), the planetary gear unit (15) and the swashplate pump (23) are assembled to form a module (31) in a receptacle housing (32).

11. Arrangement according to claim 10, **characterized in that** the receptacle housing (32) is interlocked with a bearing housing (33) of the drive system (As).

## Revendications

1. Dispositif d'entraînement variable des roues d'un essieu d'un véhicule automobile doté respectivement d'un dispositif de commande pour influer sur le couple d'entraînement de la roue respective, chaque dispositif de commande comprenant un élément de commande mécanique et un élément de commande hydrostatique coopérant et par l'intermédiaire desquels un couple-moteur défini est associé à la roue respective du véhicule automobile, chaque élément de commande mécanique prenant la forme d'une unité d'engrenages planétaires,
dans lequel:
- l'unité d'engrenages planétaires (15) comporte plusieurs étages, de préférence deux étages (16 et 17);
- l'unité d'engrenages planétaires (15) est pourvue de deux roues solaires (18 et 19) connexes s'engrenant avec des roues planétaires (20) communes;
- les roues planétaires (20) sont disposées entre les porte-planétaire (21 et 22) distants; et
- chaque élément de commande hydrostatique (14) prend la forme d'une pompe à disque oblique (23), dotée de pompes (25) disposées comme des planètes et d'un disque oblique (24) et coopérant avec l'unité d'engrenages planétaires (15), chaque pompe (25) comprenant un cylindre (26) et un piston (27).

2. Dispositif selon la revendication 1, **caractérisé en ce que** l'unité d'engrenages planétaires (15) et la pompe à disque oblique (23) sont disposées de façon coaxiale l'une par rapport à l'autre.

3. Dispositif selon la revendication 2, **caractérisé en ce que** l'unité d'engrenages planétaires (15) et la pompe à disque oblique (23) sont disposées entre un différentiel (5) d'un système d'entraînement (As) et la roue (3 ou 4) du véhicule automobile (1).

4. Dispositif selon les revendications 1 et 2, **caractérisé en ce que** les pompes (25) de la pompe à disque oblique (23) sont entourées par les roues planétaires (20).

5. Dispositif selon les revendications 1 et 2, **caractérisé en ce que** les pompes (25) de la pompe à disque oblique (23) s'étendent à l'extérieur des roues planétaires (20) et s'entourent desdites roues planétaires (20).

6. Dispositif selon l'une quelconque des revendications précédentes ou plusieurs d'entre elles, **caractérisé en ce que** la commande du couple-moteur se produit, pour la roue (3 ou 4) respective, par l'intermédiaire du disque oblique (24), par réglage de la levée.

7. Dispositif selon la revendication 6, **caractérisé en ce que** le réglage de l'inclinaison du disque oblique (24) est réalisé au moyen d'une technique utilisant des actionneurs, comme par exemple un mécanisme à broche.

8. Dispositif selon l'une quelconque des revendications précédentes ou plusieurs d'entre elles, **caractérisé en ce que** la commande du couple d'entraînement est provoquée, pour la roue respective, par un disque de commande (28) prenant la forme d'un étranglement influençant les pompes (25).

9. Dispositif selon la revendication 8, **caractérisé en ce que** le disque de commande (28) est disposé coaxialement par rapport à l'unité d'engrenages planétaires (15) et/ou à la pompe à disque oblique (23).

10. Dispositif selon l'une quelconque des revendications précédentes ou plusieurs d'entre elles, **caractérisé en ce que** le disque oblique (24), l'unité d'engrenages planétaires (15) et la pompe à disque oblique (23) sont regroupés en une unité modulaire (31) dans un boîtier de logement (32).

11. Dispositif selon la revendication 10, **caractérisé en ce que** le boîtier de logement (32) est verrouillé avec un carter de palier (33) du système d'entraînement (As).
